# EUROPEAN PATENT APPLICATION

(11) **EP 1 191 726 A1**
(43) Date of publication of application: **27.03.2002**
(21) Application number: 00610099.4
(22) Date of filing: 26.09.2000
(51) Int. Cl.: H04J 14/02, H04L 1/00

(54) **A method of transmitting data symbols in a digital teletransmission network; a digital teletransmission network and network elements therefor**

(71) Applicant: TELLABS DENMARK A/S, 2750 Ballerup (DK)
(72) Inventor: Garde, Tobias F., 2100 Copenhagen Oe (DK)
(74) Representative: Boesen, Johnny Peder

(57) **Abstract**

A method of transmitting data symbols (R_{DAT}; R_{DAT1}; R_{DAT2}) between network elements in a digital teletransmission network (1) comprises the steps of transmitting the data symbols from a first network element (2) to a second network element (3) by modulating a signal having a first wavelength (λ_{DAT}; λ_{DAT1}; λ_{DAT2}) ; receiving in the second network element the data symbols by demodulation of the signal having a first wavelength, calculating a number of extra symbols (R_{FEC}) from the data symbols, transmitting also the extra symbols; receiving in the second network element the extra symbols; and utilizing them for error correction of the received data symbols. The extra symbols are transmitted from the first network element by modulating a signal having a second wavelength (λ_{FEC}) different from the first wavelength. By using a separate wavelength for the extra symbols the data symbols can be transmitted unaffected according to the normal standards.

## Description

The invention relates to a method of transmitting data symbols between network elements in a digital teletransmission network, wherein the data symbols are transmitted from a first network element to a second network element by modulating in the first network element a signal having a first wavelength; the data symbols are received in said second network element by demodulation of the signal having a first wavelength; a number of extra symbols are calculated from the data symbols in the first network element; also the extra symbols are transmitted from the first network element to the second network element; the extra symbols are received in the second network element; and the received extra symbols are utilized for error correction of the received data symbols. The invention further relates to such a digital teletransmission network and to network elements for transmission and reception of data symbols in such a network.

In digital teletransmission networks the overall transmission quality can by improved by using error correction coding. Such a coding involves the calculation of a number of extra symbols from the data symbols to be transmitted from a transmitting network element, and the transmission of these extra symbols to the receiving network element, in which they are used for error correction. An example of such a network is a network in which symbols are transmitted according to a Synchronous Digital Hierarchy (SDH), and the error correction coding could e.g. be a Forward Error Correction (FEC) coding.

However, the need to transmit these extra symbols in addition to the data symbols imposes a requirement for a larger transmission capacity of the network than would be the case for the system without error correction coding. Since most transmission protocols, such as e.g. SDH, are specified without error correction coding, this means that the system must be modified in order to provide the extra capacity.

One well-known way to provide the extra transmission capacity is to use enhanced transmitters and receivers, which are able to accommodate a greater symbol rate. The transmitter has an error correction encoder in which the data stream is divided into blocks of the same size, and the extra symbols corresponding to each block are appended, resulting in so-called codewords. The greater symbol rate of the system makes it possible to transmit the entire codeword in the time slot normally used for the original data block only. The data and the error correction overhead are thus transmitted at a single common wavelength, which is typically the same as for a system without error correction coding. The higher symbol rate and thus the necessary increase in transmission bandwidth are realized by using a larger bandwidth around the single carrier. A sort of frame synchronisation is an important part of the coding system, because the decoding can only be successfully performed if the absolute position of the codewords in the received symbol stream is known. This problem is usually solved by inserting a known repetitive pattern in the stream of symbols, even though this adds slightly to the size of the error correction overhead.

However, this solution has the disadvantage that the implementation of enhanced transmitters and receivers at least requires that a new transmitter and receiver design is provided. Also, the sensitivity of the enhanced receiver is degraded because of the higher symbol rate, though this loss is compensated for by the error correction performance gain. Furthermore, it is not possible to use such enhanced transmitters or receivers together with equipment specified according to the normal standards or with the equipment of other vendors, not even if the performance improvement from the error correction coding can be sacrificed.

Another solution is known from EP 684 712 which discloses an optical transmission system applicable to an SDH network. Line terminating equipment provides a Forward Error Correcting (FEC) circuit which is designed to perform coding/decoding operations on the transmitted frames. Check bits generated by an FEC coding circuit are written into undefined byte areas in an MSOH (Multiplex-Section Overhead) field of an STM (Synchronous Transport Module) frame, and error correcting is performed at a decoder circuit on the basis of the embedded check bits. By embedding the extra symbols into existing unused bytes of the STM frame increase of the standardized symbol rate can be avoided. However, also this solution has the disadvantage that although the STM frames are transmitted with the standardized symbol rate they no longer have the standardized format. This means that the transmitters and receivers of this system cannot necessarily be used together with equipment specified according to the normal standards or with the equipment of other vendors. If not all network elements in the path between two line terminating elements are modified to handle the embedded overhead, the error correcting information will be lost and no error correction can be performed at the receiving end. Further, the number of these unused bytes in an STM frame is rather limited, and thus also only a limited number of error correction bits can be transmitted in this way.

Therefore, it is an object of the invention to provide a method of the above-mentioned type which can be used together with equipment specified according to the normal standards or with the equipment of other vendors, and which is not limited to the low number of error correction bits provided by the method of EP 684 712.

According to the invention the object is achieved in that the extra symbols are transmitted from the first network element by modulating a signal having a second wavelength different from the first wavelength.

By using a separate wavelength for the extra symbols the data symbols can be transmitted unaffected according to the normal standards, thus ensuring compatibility with other standard equipment and equipment of other vendors. Further, the separate wavelength can accommodate a higher number of error correction bits than mentioned above.

An expedient embodiment of the invention is achieved when the signals having first and second wavelengths are optical signals, as is stated in claim 2. In this case, as stated in claim 3, the optical signals having first and second wavelengths may be combined by multiplexing before they are transmitted from the first network element. In this way the data symbols and the relating extra symbols may be transmitted through a common fibre of an optical network.

As stated in claim 4, the method may further comprise the steps of transmitting data symbols from the first network element by modulating a plurality of signals having different wavelengths, calculating a number of extra symbols for each of said plurality of signals, and transmitting the extra symbols calculated for each of said plurality of signals by modulating the signal having a second wavelength. Thus the plurality of channels of a wavelength division multiplex (WDM) can use the second wavelength in common.

In an expedient embodiment stated in claim 5 the calculation of the extra symbols is performed as a Forward Error Correction (FEC) coding. In another expedient embodiment stated in claim 6 the data symbols are transmitted according to a Synchronous Digital Hierarchy (SDH).

As mentioned, the invention further relates to a digital teletransmission network for transmission of data symbols between a number of network elements, wherein at least a first network element comprises means for transmitting the data symbols by modulating a signal having a first wavelength, means for calculating a number of extra symbols from the data symbols, and means for transmitting also the extra symbols; and at least a second network element comprises means for receiving the data symbols by demodulation of said signal having a first wavelength, means for receiving the extra symbols, and means for utilizing the received extra symbols for error correction of the received data symbols. When the first network element is adapted to transmit the extra symbols by modulating a signal having a second wavelength different from said first wavelength, the data symbols can be transmitted unaffected according to the normal standards, thus ensuring compatibility with other standard equipment and equipment of other vendors. Further, the separate wavelength can accommodate a higher number of error correction bits than mentioned above. Expedient embodiments corresponding to those described above are mentioned in the claims 8 to 12.

As mentioned, the invention further relates to a network element for transmission of data symbols in a digital teletransmission network, comprising means for transmitting the data symbols by modulating a signal having a first wavelength, means for calculating a number of extra symbols from the data symbols, and means for transmitting also the extra symbols. When the network element is adapted to transmit the extra symbols by modulating a signal having a second wavelength different from said first wavelength, the data symbols can be transmitted unaffected according to the normal standards, thus ensuring compatibility with other standard equipment and equipment of other vendors. Further, the separate wavelength can accommodate a higher number of error correction bits than mentioned above. Expedient embodiments corresponding to those described above are mentioned in the claims 14 to 18.

As mentioned, the invention further relates to a network element for reception of data symbols in a digital teletransmission network, comprising means for receiving the data symbols by demodulation of a signal having a first wavelength, means for receiving extra-symbols, and means for utilizing the received extra symbols for error correction of the received data symbols. When the network element is adapted to receive the extra symbols by demodulation of a signal having a second wavelength different from said first wavelength, the data symbols can be transmitted unaffected according to the normal standards, thus ensuring compatibility with other standard equipment and equipment of other vendors. Further, the separate wavelength can accommodate a higher number of error correction bits than mentioned above. Expedient embodiments corresponding to those described above are mentioned in the claims 20 to 24.

The invention will now be described more fully below with reference to the drawing, in which
Figure 1 shows a digital teletransmission network in which the invention can be used,
figure 2 shows a prior art network having error correction,
figure 3 shows a network having error correction according to the invention,
figure 4 shows the transmitting end of a multi-channel network according to the invention, and
figure 5 shows the receiving end of a multi-channel network according to the invention.

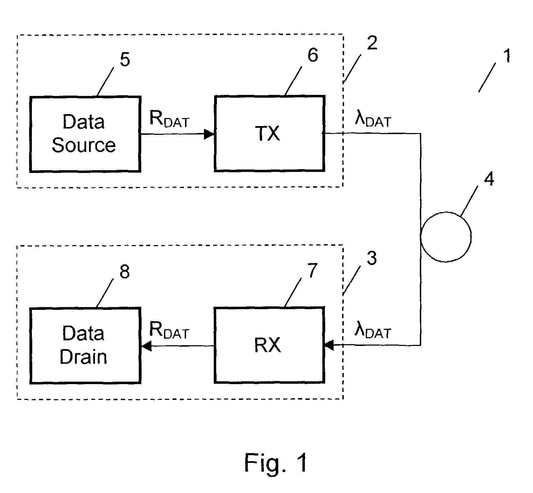

Figure 1 shows an example of a digital teletransmission network 1 in which the invention can be used. The example shown is an optical network, such as e.g. an SDH (Synchronous Digital Hierarchy) network, and two network elements 2 and 3 are shown, although the network may comprise several further network elements. The network itself is here shown as an optical fibre 4 connecting the two elements 2 and 3 to each other.

Optical signals may be transmitted between the two elements in both directions. However, for reasons of clarity only transmission from network element 2 to network element 3 is shown in the figure. Therefore, a data source 5 and a transmitter 6 are shown in the network element 2, while a receiver 7 and a data drain 8 are shown in the network element 3.

The data source 5 generates a stream of data symbols R_{DAT} which modulates an optical signal having the wavelength λ_{DAT} in the transmitter 6. At the opposite end of the optical path through the fibre 4 the optical signal is received by the receiver 7 and demodulated such that the stream of data symbols R_{DAT} is regenerated and sent to the data drain 8.

The equipment of the network shown in figure 1 is standard equipment made according to the relevant standards, in this case the SDH specifications, and thus it does not comprise Forward Error Correction (FEC) coding. FEC coding can be used to improve the overall receiver sensitivity in a digital communications system. The coding process introduces an overhead by calculating a number of extra symbols from the data symbols, and the need to transmit these overhead symbols imposes a requirement for a larger bandwidth of the system. It is therefore not possible to directly make use of the ordinary (standard) equipment for the transmitter and receiver as shown in figure 1.

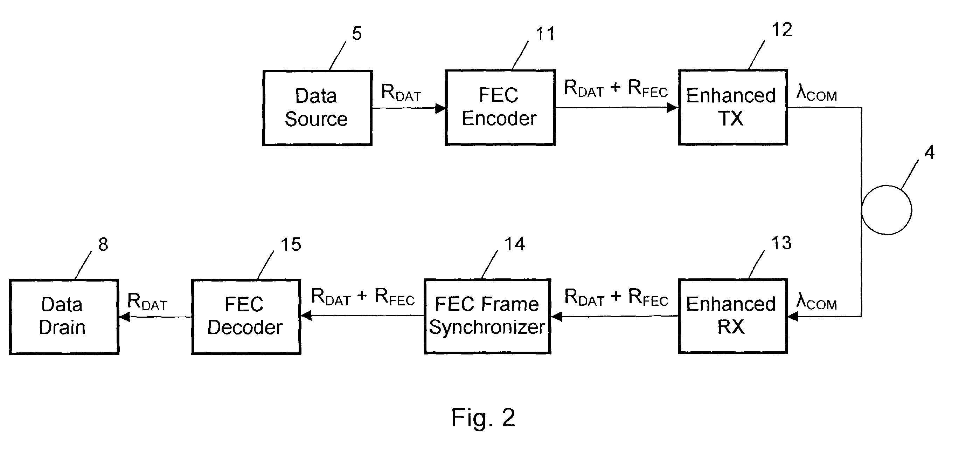

Figure 2 shows a prior art solution to the overhead transmission problem. Here an enhanced transmitter and receiver, which are able to accommodate a larger symbol rate, are used. In the FEC encoder 11 the data stream R_{DAT} from the data source 5 is divided into blocks of the same size, and an overhead R_{FEC} corresponding to each block is appended, resulting in so-called code words. The greater symbol rate of the system makes it possible to transmit the entire codeword in the time slot normally used for the original data block.

As appears from the figure, the data R_{DAT} and the FEC overhead R_{FEC} are transmitted at a single common wavelength λ_{COM}, which is typically the same as λ_{DAT} for a system without FEC coding as shown in figure 1. The necessary increase in bandwidth is then realised by using a larger bandwidth around the single carrier. The transmitter 12 is thus an enhanced transmitter capable of transmitting with a higher symbol rate than the transmitter 6 of figure 1 in order to transmit R_{FEC} in addition to R_{DAT}.

Similarly, an enhanced receiver 13 is used at the receiving end, and the regenerated data stream R_{DAT} + R_{FEC} is sent to an FEC frame synchronizer 14 and an FEC decoder 15. The FEC decoder 15 executes an error correction function based on the symbols R_{FEC}, and thus an error corrected version of the data stream R_{DAT} is generated and sent to the data drain 8. The FEC frame synchronisation is an important part of the coding system. This is because the decoding can only be successfully performed if the absolute position of the code words in the received symbol stream is known. This problem is usually solved by inserting a known repetitive pattern in the stream of symbols, even though this adds slightly to the size of the FEC overhead.

Some disadvantages of this solution are that when an enhanced transmitter and receiver are to be implemented, it is at least necessary to provide a new and specialized transmitter and receiver design. Also, the sensitivity of the enhanced receiver is degraded because of the higher symbol rate, though this loss is compensated for by the FEC performance gain. Furthermore, it is not possible to use an enhanced transmitter or receiver together with standard equipment or with the equipment of other vendors, even if the performance improvement from the FEC coding can be sacrificed, because the symbol rate of the enhanced equipment differs from the standardized symbol rate.

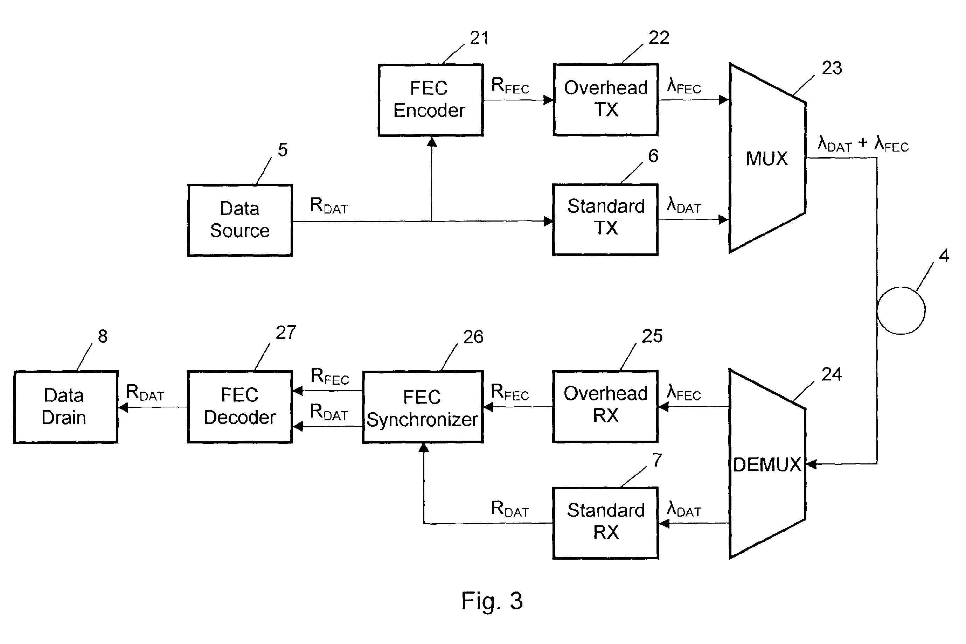

Figure 3 shows a system providing a solution according to the invention. The basic idea is an alternative solution to the overhead transmission problem. Instead of using the same wavelength for both the data R_{DAT} and FEC overhead R_{FEC}, the overhead is transmitted at a separate wavelength λ_{FEC} different from the one used for the data λ_{DAT}. In fact, this is equivalent to using a separate communications channel for transmitting the FEC overhead.

As shown in the figure, the data R_{DAT} are transmitted at the nominal symbol rate using standard transmitter equipment 6. The FEC encoder 21, in this case, does not divide the data into blocks which in turn have corresponding blocks of overhead appended. Instead, the FEC overhead R_{FEC} is transmitted using separate transmitter equipment 22 which operates at a separate wavelength λ_{FEC}. Since the size of the overhead is relatively small in many applications, this can either be low rate transmitter equipment or a standard transmitter using only part of its bandwidth. Before the signals are launched into the transmission medium, i.e. the fibre 4, they are combined by means of a multiplexer 23, so that both wavelengths are transmitted simultaneously in the fibre 4.

At the receiver site, the data signal and the FEC overhead signal, i.e. the two wavelengths λ_{DAT} and λ_{FEC}, are separated using a de-multiplexer 24 and processed by their individual receivers 7 and 25. The resulting streams of overhead R_{FEC} and data symbols R_{DAT} are fed to the FEC synchronisation unit 26, which monitors and adjusts the alignment between the streams. The synchronisation unit 26 must thus resolve the difference in time delay between signals transmitted at different wavelengths, and keep track of the relative timing epochs of the data and FEC overhead streams. Following the synchronisation, both symbol streams R_{DAT} and R_{FEC} are passed along to the FEC decoder 27, where the additional information available in the overhead symbols is used to detect and correct transmission errors in the data stream R_{DAT}, which is finally sent to the data drain 8.

One of the advantages of the above system is that standard equipment can be used for the data transmitter and receiver. This means that the critical high-rate equipment does not have to be redesigned. It is also advantageous that it can be used as an add-on to existing systems. Standard systems already installed do not have to be replaced to obtain the improved performance. Transmitter and receiver equipment can interface seamlessly with standard equipment. In that case, however, the FEC performance gain is lost, because the existing standard equipment is not equipped to transmit the FEC overhead.

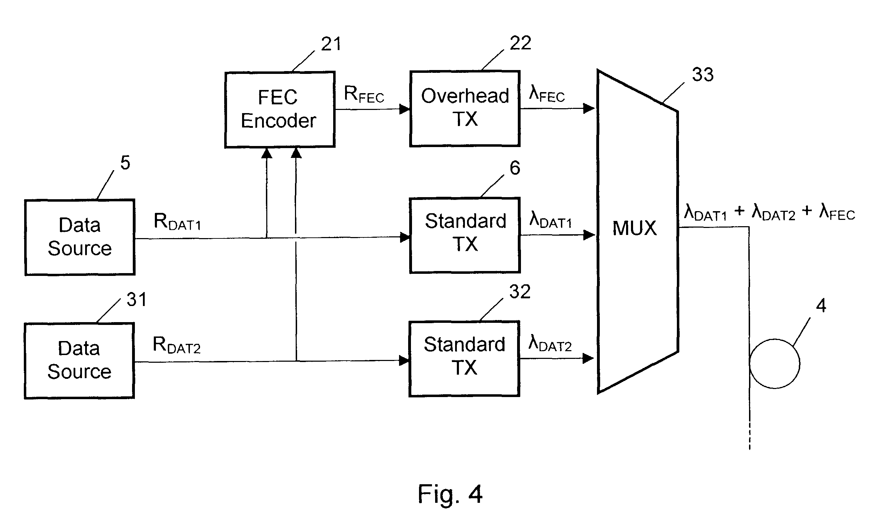

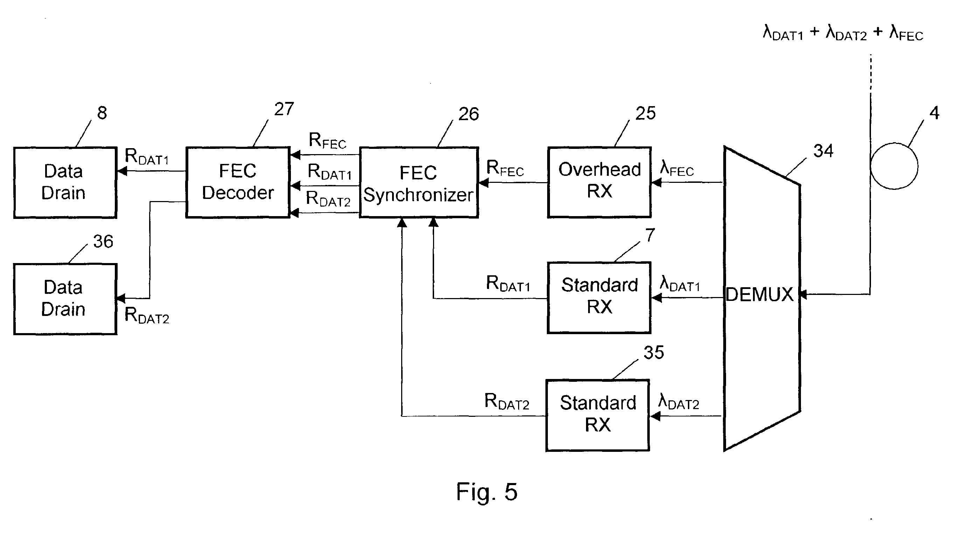

The invention is described above in relation to a single channel communications system. The invention can be generalised to Wavelength Division Multiplex (WDM) systems. In that case, several data channels are transmitted simultaneously through the same medium using different wavelengths. The FEC overhead of the data channels is then transmitted at one or more wavelengths, separate from the ones used for transmitting the data. This is illustrated in figures 4 and 5.

Figure 4 shows an example of a transmitter end of a WDM system. For reasons of clarity the figure shows a system having two data channels, but it should be noted that in practise a WDM system will often have more than two channels. Typical examples will be four, 16 or 32 channels in one system.

Further to the data source 5 a second data source 31 is shown, and the two data sources generate two streams of data symbols R_{DAT1} and R_{DAT2}. These data streams modulate optical signals having the wavelengths λ_{DAT1} and λ_{DAT2} in the transmitters 6 and 32, respectively. The data signals R_{DAT1} and R_{DAT2} are also taken to the FEC encoder 21 where the overhead R_{FE}C is calculated. In this case R_{FEC} comprises overhead symbols for R_{DAT1} as well as R_{DAT2}, and similarly to figure 3 these symbols are transmitted using the separate transmitter equipment 22 which operates at a separate wavelength λ_{FEC}. The bandwidth of the transmitter 22 is sufficient to accommodate FEC overhead for several channels. Before the signals are launched into the transmission medium 4 they are combined by means of the multiplexer 33, so that all three wavelengths λ_{DAT1}, λ_{DAT2} and λ_{FEC} are transmitted simultaneously in the fibre 4.

Figure 5 shows an example of a receiver end of a WDM system. Again only two channels are shown. The data signals and the FEC overhead signal, i.e. the three wavelengths λ_{DAT1}, λ_{DAT2} and λ_{FEC}, are separated using a de-multiplexer 34 and processed by their individual receivers 7, 35 and 25. The resulting streams of overhead R_{FEC} and data symbols R_{DAT1} and R_{DAT2} are fed to the FEC synchronisation unit 26, which monitors and adjusts the alignment between the streams like in figure 3. Following the synchronisation, the symbol streams R_{DAT1}, R_{DAT2} and R_{FEC} are passed along to the FEC decoder 27, where the additional information available in the overhead symbols is used to detect and correct transmission errors in the data streams R_{DAT1} and R_{DAT2}, which is finally sent to the two data drains 8 and 36.

Although a preferred embodiment of the present invention has been described and shown, the invention is not restricted to it, but may also be embodied in other ways within the scope of the subject-matter defined in the following claims.

## Claims

1. A method of transmitting data symbols (R_{DAT}; R_{DAT1}; R_{DAT2}) between network elements in a digital teletransmission network (1), comprising the steps of
• transmitting the data symbols (R_{DAT}; R_{DAT1}; R_{DAT2}) from a first network element (2) to a second network element (3) by modulating in said first network element at least one signal having a first wavelength (λ_{DAT}; λ_{DAT1}; λ_{DAT2}),
• receiving in said second network element (3) the data symbols (R_{DAT}; R_{DAT1}; R_{DAT2}) by demodulation of said signal having a first wavelength,
• calculating in said first network element (2) a number of extra symbols (R_{FEC}) from the data symbols (R_{DAT}; R_{DAT1}; R_{DAT2}),
• transmitting also the extra symbols (R_{FEC}) from the first network element (2) to the second network element (3),
• receiving in the second network element (3) the extra symbols (R_{FEC}), and
• utilizing the received extra symbols (R_{FEC}) for error correction of the received data symbols (R_{DAT}; R_{DAT1}; R_{DAT2}),
**characterized in that**
the extra symbols (R_{FEC}) are transmitted from the first network element (2) by modulating at least one signal having a second wavelength (λ_{FEC}) different from said first wavelength (λ_{DAT}; λ_{DAT1}; λ_{DAT2}).

2. A method according to claim 1, **characterized in that** said signals having first and second wavelengths are optical signals.

3. A method according to claim 2, **characterized in that** said optical signals having first and second wavelengths are combined by multiplexing before they are transmitted from the first network element (2).

4. A method according to any one of claims 1 to 3, **characterized in that** it further comprises the steps of
• transmitting data symbols from the first network element by modulating a plurality of signals having different wavelengths (λ_{DAT1}; λ_{DAT2}),
• calculating a number of extra symbols (R_{FEC}) for each of said plurality of signals, and
• transmitting the extra symbols (R_{FEC}) calculated for each of said plurality of signals by modulating the signal having a second wavelength (λ_{FEC}).

5. A method according to any one of claims 1 to 4, **characterized in that** the calculation of the extra symbols (R_{FEC}) is performed as a Forward Error Correction (FEC) coding.

6. A method according to any one of claims 1 to 5, **characterized in that** the data symbols (R_{DAT}; R_{DAT1}; R_{DAT2}) are transmitted according to a Synchronous Digital Hierarchy (SDH).

7. A digital teletransmission network (1) for transmission of data symbols (R_{DAT}; R_{DAT1}; R_{DAT2}) between a number of network elements, wherein
at least a first network element (2) comprises
• means (6; 32) for transmitting the data symbols (R_{DAT}; R_{DAT1}; R_{DAT2}) by modulating at least one signal having a first wavelength (λ_{DAT}; λ_{DAT1}; λ_{DAT2}),
• means (21) for calculating a number of extra symbols (R_{FEC}) from the data symbols (R_{DAT}; R_{DAT1}; R_{DAT2}), and
• means (22) for transmitting also the extra symbols (R_{FEC}), and
at least a second network element (3) comprises
• means (7; 35) for receiving the data symbols (R_{DAT}; R_{DAT1}; R_{DAT2}) by demodulation of said signal having a first wavelength,
• means (25) for receiving the extra symbols (R_{FEC}), and
• means (27) for utilizing the received extra symbols (R_{FEC}) for error correction of the received data symbols (R_{DAT}; R_{DAT1}; R_{DAT2}),
**characterized in that**
the first network element (2) is adapted to transmit the extra symbols (R_{FEC}) by modulating at least one signal having a second wavelength (λ_{FEC}) different from said first wavelength (λ_{DAT}; λ_{DAT1}; λ_{DAT2}).

8. A digital teletransmission network according to claim 7, **characterized in that** said signals having first and second wavelengths are optical signals.

9. A digital teletransmission network according to claim 8, **characterized in that** the first network element (2) comprises means (23; 33) for combining said optical signals having first and second wavelengths by multiplexing before they are transmitted.

10. A digital teletransmission network according to any one of claims 7 to 9, **characterized in that** said first network element (2) comprises
• means (6, 32) for transmitting data symbols by modulating a plurality of signals having different wavelengths (λ_{DAT1}; λ_{DAT2}),
• means (21) for calculating a number of extra symbols (R_{FEC}) for each of said plurality of signals, and
• means (22) for transmitting the extra symbols (R_{FEC}) calculated for each of said plurality of signals by modulating the signal having a second wavelength (λ_{FEC})

11. A digital teletransmission network according to any one of claims 7 to 10, **characterized in that** the calculating means (21) are adapted to perform the calculation of the extra symbols (R_{FEC}) as a Forward Error Correction (FEC) coding.

12. A digital teletransmission network according to any one of claims 7 to 11, **characterized in that** the first network element (2) is adapted to transmit the data symbols (R_{DAT}; R_{DAT1}; R_{DAT2}) according to a Synchronous Digital Hierarchy (SDH).

13. A network element (2) for transmission of data symbols (R_{DAT}; R_{DAT1}; R_{DAT2}) in a digital teletransmission network (1), comprising
• means (6; 32) for transmitting the data symbols (R_{DAT}; R_{DAT1}; R_{DAT2}) by modulating at least one signal having a first wavelength (λ_{DAT}; λ_{DAT1}; λ_{DAT2}),
• means (21) for calculating a number of extra symbols (RFEC) from the data symbols (R_{DAT}; R_{DAT1}; R_{DAT2}), and
• means (22) for transmitting also the extra symbols (R_{FEC}),
**characterized in that**
the network element is adapted to transmit the extra symbols (R_{FEC}) by modulating at least one signal having a second wavelength (λ_{FEC}) different from said first wavelength (λ_{DAT}; λ_{DAT1}; λ_{DAT2}).

14. A network element according to claim 13, **characterized in that** said signals having first and second wavelengths are optical signals.

15. A network element according to claim 14, **characterized in that** it comprises means (23; 33) for combining said optical signals having first and second wavelengths by multiplexing before they are transmitted.

16. A network element according to any one of claims 13 to 15, **characterized in that** it comprises
• means (6, 32) for transmitting data symbols by modulating a plurality of signals having different wavelengths (λ_{DAT1}; λ_{DAT2}),
• means (21) for calculating a number of extra symbols (R_{FEC}) for each of said plurality of signals, and
• means (22) for transmitting the extra symbols (R_{FEC}) calculated for each of said plurality of signals by modulating the signal having a second wavelength (λ_{FEC}).

17. A network element according to any one of claims 13 to 16, **characterized in that** the calculating means (21) are adapted to perform the calculation of the extra symbols (R_{FEC}) as a Forward Error Correction (FEC) coding.

18. A network element according to any one of claims 13 to 17, **characterized in that** it is adapted to transmit the data symbols (R_{DAT}; R_{DAT1}; R_{DAT2}) according to a Synchronous Digital Hierarchy (SDH).

19. A network element (3) for reception of data symbols (R_{DAT}; R_{DAT1}; R_{DAT2}) in a digital teletransmission network (1), comprising
• means (7; 35) for receiving the data symbols (R_{DAT}; R_{DAT1}; R_{DAT2}) by demodulation of at least one signal having a first wavelength,
• means (25) for receiving extra symbols (R_{FEC}), and
• means (27) for utilizing the received extra symbols (R_{FEC}) for error correction of the received data symbols (R_{DAT}; R_{DAT1}; R_{DAT2}),
**characterized in that**
the network element is adapted to receive the extra symbols (R_{FEC}) by demodulation of at least one signal having a second wavelength (λ_{FEC}) different from said first wavelength (λ_{DAT}; λ_{DAT1}; λ_{DAT2}).

20. A network element according to claim 19, **characterized in that** said signals having first and second wavelengths are optical signals.

21. A network element according to claim 20, **characterized in that** it comprises means (24; 34) for separating said optical signals having first and second wavelengths by de-multiplexing.

22. A network element according to any one of claims 19 to 21, **characterized in that** it comprises
• means (7, 35) for receiving data symbols by demodulating a plurality of signals having different wavelengths (λ_{DAT1}; λ_{DAT2}),
• means (25) for receiving extra symbols (R_{FEC}) for each of said plurality of signals by demodulating the signal having a second wavelength (λ_{FEC}), and
• means (27) for utilizing the extra symbols (R_{FEC}) for error correction of the received data symbols (R_{DAT1}; R_{DAT2}) for each of said plurality of signals.

23. A network element according to any one of claims 19 to 22, **characterized in that** the utilizing means (27) are adapted to perform the error correction as a Forward Error Correction (FEC) decoding.

24. A network element according to any one of claims 19 to 23, **characterized in that** it is adapted to receive the data symbols (R_{DAT}; R_{DAT1}; R_{DAT2}) according to a Synchronous Digital Hierarchy (SDH).
